# EUROPEAN PATENT SPECIFICATION

(11) **EP 4 570 422 B1**
(45) Date of publication and mention of the grant of the patent: **08.04.2026**
(21) Application number: 23915186.3
(22) Date of filing: 18.12.2023
(51) Int. Cl.: B23K 37/04, B23K 31/02, H01M 10/04, G01B 11/00, B23K 101/36

(54) **PRE-WELDING POSITIONING SYSTEM AND METHODS**
VORSCHWEISS-POSITIONIERUNGSSYSTEM UND -VERFAHREN
SYSTÈME ET PROCÉDÉS DE POSITIONNEMENT DE PRÉSOUDAGE

(30) Priority: 08.10.2023 CN 202311289967
(43) Date of publication of application: 18.06.2025
(73) Proprietor: Contemporary Amperex Technology (Hong Kong) Limited, Central, Central And Western District (HK)
(72) Inventor: Wu, Kai, Ningde, Fujian 352100 (CN); Zhang, Beining, Ningde, Fujian 352100 (CN); Wu, Ying, Ningde, Fujian 352100 (CN); Wang, Wenchong, Ningde, Fujian 352100 (CN); Zhao, Jun, Ningde, Fujian 352100 (CN); Xie, Wenjie, Ningde, Fujian 352100 (CN)
(74) Representative: Gong, Jinping
(86) International application number: PCT/CN2023/139609
(87) International publication number: WO 2025/077002

(56) References cited:
- CN-A- 105 215 543
- CN-A- 109 201 413
- CN-A- 112 577 423
- CN-A- 115 930 784
- CN-A- 116 690 009
- CN-A- 117 020 543
- CN-U- 217 504 709
- JP-A- 2008 279 535
- JP-A- H11 282 602

## Description

The present disclosure relates to the technical field of pre-welding positioning of battery packs, and in particular to a pre-welding positioning system and methods, see claims 1, 8 and 13.

### Background Art

New energy batteries are becoming widely used in life and industry. For example, new energy vehicles equipped with the batteries have been widely used. In addition, the batteries are increasingly used in energy storage and other fields.

In the related technologies, it is necessary for a battery pack to have a corresponding welding positioning hole thereof accurately identified before the battery pack enters a station for welding. An inaccurate identification of the welding positioning hole may result in a low yield or a low efficiency in subsequent welding.

CN116690009A provides a battery module connecting piece welding method, system and equipment and a medium in the technical field of battery module production.

CN105215543A (describing the preamble of claims 1, 8 and 13) shows a five-dimensional control device and method for welding a cell module.

### Summary of the Invention

The present invention provides a pre-welding positioning system and methods, aiming to improving the pre-welding positioning accuracy of battery packs.

According to a first aspect of the present invention, a pre-welding positioning system is defined in claim 1, the system including: a frame body, a controller, a three-axis mechanism arranged on the frame body, and a vision acquisition system and a fixing component arranged on the three-axis mechanism, where
the controller is configured to control the three-axis mechanism to move to a designated position based on product information of a battery pack to be welded;
the vision acquisition system is configured to acquire, at the designated position, an image of a positioning component of the battery pack, in response to the three-axis mechanism reaching the designated position; and determine a distance deviation value between the positioning component and a preset reference point based on the acquired detection image; and
the controller is further configured to control the three-axis mechanism to drive the fixing component to the positioning component based on the distance deviation value so as to fix the battery pack to the frame body by the fixing component.

As such, the vision acquisition system arranged on the three-axis mechanism acquires, at the designated position, the image of the positioning component of the battery pack, in response to the controller controlling the three-axis mechanism to reach the designated position, and obtains the distance deviation value between the positioning component and the preset reference point, such that the controller controls the three-axis mechanism to drive the fixing component to the positioning component based on the distance deviation value so as to fix the battery pack to the frame body by the fixing component. In this way, the battery pack can be accurately positioned in the pre-welding positioning system, thereby improving the accuracy and efficiency of the battery pack in the welding process.

In some embodiments of the present invention, the frame body is further provided with a jacking mechanism on which a jacking cylinder is arranged, and the jacking cylinder extends to disengage the battery pack on a transport trolley from the transport trolley; and the controller is further configured to control the jacking cylinder to extend to jack up the battery pack to a preset height, in response to a positioning request sent by the transport trolley; and then control the three-axis mechanism to move to the designated position based on the product information.

As such, the battery pack on the transport trolley is jacked up by the jacking mechanism having the jacking cylinder and arranged on the frame body, such that the battery pack is disengaged from the transport trolley, thereby providing a foundation for subsequent pre-welding positioning of the battery pack.

In some embodiments of the present invention, the controller is further configured to obtain the read product information of the battery pack and information to be compared of the battery pack, in response to the positioning request sent by the transport trolley; and control the jacking cylinder to extend in response to the product information being consistent with the information to be compared.

As such, the controller can compare the product information of the battery pack on the transport trolley to the pre-stored information to be compared in the pre-welding positioning system, which can reduce the probability that the battery pack entering the pre-welding positioning system does not meet the expectation, thereby providing a foundation for subsequent accurate pre-welding positioning of the battery pack by means of the foolproof measures.

In some embodiments of the present invention, the vision acquisition system is further configured to send the distance deviation value to a storage module of the controller; and the distance deviation value includes: a first deviation value in an X-axis direction and a second deviation value in a Y-axis direction in a two-dimensional plane coordinate system.

As such, the vision acquisition system is configured to send the obtained distance deviation value to the storage module of the controller, so that the controller can subsequently perform data storage and security management of the distance deviation value.

In some embodiments of the present invention, the controller is further configured to control an X-axis movement mechanism and a Y-axis movement mechanism on the three-axis mechanism to move based respectively on the first deviation value and the second deviation value, such that the fixing component moves to a position directly above the positioning component; and the controller is further configured to control a Z-axis movement mechanism on the three-axis mechanism to descend to the preset height, in response to the fixing component reaching the position directly above the positioning component, such that the fixing component is inserted into the positioning component.

As such, the controller is further configured to control the X-axis movement mechanism and the Y-axis movement mechanism on the three-axis mechanism to move to the position directly above the positioning component and control the Z-axis movement mechanism on the three-axis mechanism to descend to the preset height based respectively on the first deviation value, the second deviation value, and the battery pack jacked up to the preset height, such that the fixing component arranged on the three-axis mechanism is automatically inserted into the positioning component of the battery pack. In this way, the fixing component is inserted into the positioning component accurately through multi-dimensional adjustment.

In some embodiments of the present invention, the controller is further configured to determine a first compensated distance value corresponding to the X-axis movement mechanism based on the first deviation value and determine a second compensated distance value corresponding to the Y-axis movement mechanism based on the second deviation value; and the controller is further configured to control the X-axis movement mechanism to move based on the first compensated distance value and control the Y-axis movement mechanism to move based on the second compensated distance value, such that the fixing component moves to the position directly above the positioning component.

As such, the controller is configured to control the X-axis movement mechanism to move based on the first compensated distance value corresponding to the first deviation value and control the Y-axis movement mechanism to move based on the second compensated distance value corresponding to the second deviation value, respectively. In this way, the fixing component on the three-axis mechanism can be controlled to be accurately positioned directly above the positioning component.

In some embodiments of the present invention, a lower frame body and an upper frame body are provided on the frame body, the jacking mechanism is arranged on the lower frame body, a truss is arranged on the upper frame body, and two three-axis mechanisms are arranged on the truss; and the transport trolley transports the battery pack in a preset direction into a preset station corresponding to the frame body, and after the battery pack is disengaged from the transport trolley, the transport trolley pulls out of the preset station in a direction opposite to the preset direction; and the two three-axis mechanisms are configured to fix positioning components located on two opposite corners of the battery pack.

As such, the positioning components located on the two opposite corners of the battery pack are respectively fixed by the two three-axis mechanisms, such that the fixation between the battery pack and the frame body is more stable and secure.

According to a second aspect of the present invention, a pre-welding positioning method is defined in claim 8, the method being applied to a controller of a pre-welding positioning system, the pre-welding positioning system including: a frame body, a three-axis mechanism arranged on the frame body, and a vision acquisition system and a fixing component arranged on the three-axis mechanism, where
the controller controls the three-axis mechanism to move to a designated position based on product information of a battery pack to be welded, such that the vision acquisition system acquires, at the designated position, an image of a positioning component of the battery pack;
obtains a distance deviation value, between the positioning component and a preset reference point, determined by the vision acquisition system based on the acquired detection image; and
controls the three-axis mechanism to drive the fixing component to the positioning component based on the distance deviation value so as to fix the battery pack to the frame body by the fixing component.

According to a third aspect of the present invention, another pre-welding positioning method is defined in claim 13, the method being applied to a pre-welding positioning system, the pre-welding positioning system including: a frame body, a controller, a three-axis mechanism arranged on the frame body, and a vision acquisition system and a fixing component arranged on the three-axis mechanism, where
the controller controls the three-axis mechanism to move to a designated position based on product information of a battery pack to be welded;
the vision acquisition system acquires, at the designated position, an image of a positioning component of the battery pack, in response to the three-axis mechanism reaching the designated position;
the vision acquisition system determines a distance deviation value between the positioning component and a preset reference point based on the acquired detection image; and
the controller controls the three-axis mechanism to drive the fixing component to the positioning component based on the distance deviation value so as to fix the battery pack to the frame body by the fixing component.

The embodiments of the present invention provide a pre-welding positioning system and methods, the pre-welding positioning system including: a frame body, a controller, a three-axis mechanism arranged on the frame body, and a vision acquisition system and a fixing component arranged on the three-axis mechanism, where the controller is configured to control the three-axis mechanism to move to a designated position based on product information of a battery pack to be welded; the vision acquisition system is configured to acquire, at the designated position, an image of a positioning component of the battery pack, in response to the three-axis mechanism reaching the designated position; and determine a distance deviation value between the positioning component and a preset reference point based on the acquired detection image; and the controller is further configured to control the three-axis mechanism to drive the fixing component to the positioning component based on the distance deviation value so as to fix the battery pack to the frame body by the fixing component. As such, the vision acquisition system arranged on the three-axis mechanism acquires, at the designated position, the image of the positioning component of the battery pack, in response to the controller controlling the three-axis mechanism to reach the designated position, and obtains the distance deviation value between the positioning component and the preset reference point, such that the controller controls the three-axis mechanism to drive the fixing component to the positioning component based on the distance deviation value so as to fix the battery pack to the frame body by the fixing component. In this way, the battery pack can be accurately positioned in the pre-welding positioning system, thereby improving the accuracy and efficiency of the battery pack in the welding process.

The above description is merely an overview of the technical solutions of the present invention, which can be carried out according to the contents of the description in order to make technical means of the present invention more clearly understood, and in order to make the above and other objects, features, and advantages of the present invention more easily understood, specific implementations of the present disclosure are exemplarily described below.

### Brief Description of the Drawings

In order to illustrate the technical solutions in embodiments of the present invention or in the prior art more clearly, the following briefly describes the accompanying drawings for describing the embodiments or the prior art. Apparently, the accompanying drawings in the following description show merely some embodiments of the present invention, and those of ordinary skill in the art may still derive other drawings from the structures shown in the accompanying drawings without creative efforts.
FIG. 1 is a schematic diagram of composition of a frame body in a pre-welding positioning system according to some embodiments;
FIG. 2 is a schematic diagram of composition of a three-axis mechanism in a frame body according to some embodiments;
FIG. 3 is a schematic diagram showing an offset between a positioning component in a battery pack and a vision acquisition center of a vision acquisition system according to some embodiments;
FIG. 4 is a schematic diagram of composition of a jacking mechanism in a frame body according to some embodiments;
FIG. 5 is a schematic flowchart of a pre-welding positioning method according to some embodiments;
   and
FIG. 6 is a schematic flowchart of another pre-welding positioning method according to some embodiments.

### Description of reference signs:

1-frame body; 11-three-axis mechanism; 111-X-axis movement mechanism; 112-Y-axis movement mechanism; 113-Z-axis movement mechanism; 114-vision acquisition system; 1141-vision acquisition center; 115-fixing component; 12-jacking mechanism; 121-jacking cylinder; 2-positioning component; A-first direction; B-second direction; C-third direction.

### Detailed Description of Embodiments

The technical solutions in the embodiments of the present invention will now be described clearly and fully below with reference to the accompanying drawings in the embodiments. Apparently, the embodiments described are only some of, rather than all of, the embodiments of the present invention, which is defined in the appended claims.

In the description of the embodiments of the present disclosure, the orientation or position relationships indicated by the technical terms "central", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", etc., are based on the orientation or position relationships shown in the accompanying drawings and are merely intended to facilitate and simplify the description of the embodiments, rather than indicating or implying that the device or element considered must have a particular orientation or be constructed and operated in a particular orientation, and therefore not to be construed as limiting the embodiments.

In the description of the embodiments, unless otherwise explicitly specified and defined, the technical terms such as "mounting", "connecting", "coupling", and "fixing" should be construed in a broad sense, for example, they may be a fixed connection, a detachable connection, or an integration connection; may be a mechanical connection or an electric connection; and may be a direct connection or an indirect connection by means of an intermediate medium, or may be communication between interiors of two elements or interaction between the two elements. For those of ordinary skill in the art, the specific meanings of the above terms in the embodiments of the present disclosure may be construed according to specific circumstances.

In addition, the terms "first", "second", etc., as described in the present invention, are used for descriptive purposes only and are not to be construed as indicating or implying relative importance or as implicitly indicating the number of technical features indicated. Therefore, the features defined with "first" and "second" may explicitly or implicitly include at least one of the features. In addition, "and/or", when appearing throughout the text, is intended to include three parallel solutions, such as "A and/or B" which includes a solution A, a solution B, or a solution where both A and B are met. In addition, the technical solutions of various embodiments can be combined with each other, provided that the technical solutions can be implemented by those of ordinary skill in the art. When the combination of technical solutions is contradictory or impossible to implement, it is considered that the combination of the technical solutions does not exist and the combination is not within the protection scope of the present invention.

From the perspective of the development of the market situation, traction batteries are becoming widely used, and the types of the traction batteries are increasing. The traction batteries are not only used in energy storage power systems such as hydraulic power, thermal power, wind power, and solar power stations, but also widely used in electric vehicles such as electric bicycles, electric motorcycles, electric vehicles, aerospace, and other fields. With the continuous expansion of the application field of traction batteries, the market demand for the traction batteries is also expanding.

A battery pack is one of the main components of new energy vehicles, and its internal structure is usually a distributed frame structure, and standoffs inside the battery pack need to be welded to internal beams of a housing of the battery pack. In the related technologies, in the welding process of the battery pack, the position of the battery pack is likely to be offset due to vibration in transportation of the battery pack. As a result, in the welding of the battery pack, the mounting accuracy may be reduced due to the position offset of the battery pack, thereby affecting the welding quality and welding efficiency of the entire battery pack.

Based on the above problem, the embodiments disclose a pre-welding positioning system and method, the pre-welding positioning system including: a frame body, a controller, a three-axis mechanism arranged on the frame body, and a vision acquisition system and a fixing component arranged on the three-axis mechanism, where the controller is configured to control the three-axis mechanism to move to a designated position based on product information of a battery pack to be welded; the vision acquisition system is configured to acquire, at the designated position, an image of a positioning component of the battery pack, in response to the three-axis mechanism reaching the designated position; and determine a distance deviation value between the positioning component and a preset reference point based on the acquired detection image; and the controller is further configured to control the three-axis mechanism to drive the fixing component to the positioning component based on the distance deviation value so as to fix the battery pack to the frame body by the fixing component. As such, the vision acquisition system arranged on the three-axis mechanism acquires, at the designated position, the image of the positioning component of the battery pack, in response to the controller controlling the three-axis mechanism to reach the designated position, and obtains the distance deviation value between the positioning component and the preset reference point, such that the controller controls the three-axis mechanism to drive the fixing component to the positioning component based on the distance deviation value so as to fix the battery pack to the frame body by the fixing component. In this way, the battery pack can be accurately positioned in the pre-welding positioning system, thereby improving the accuracy and efficiency of the battery pack in the welding process.

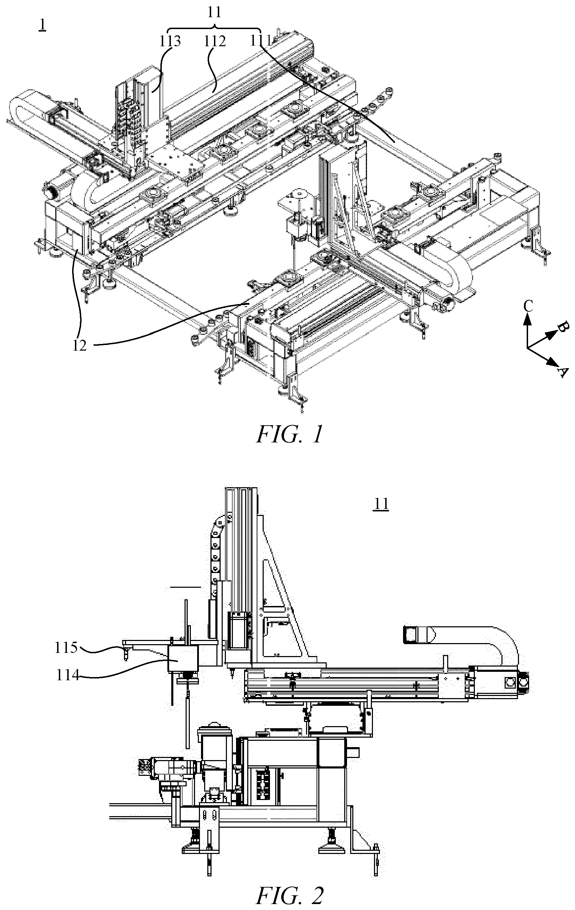

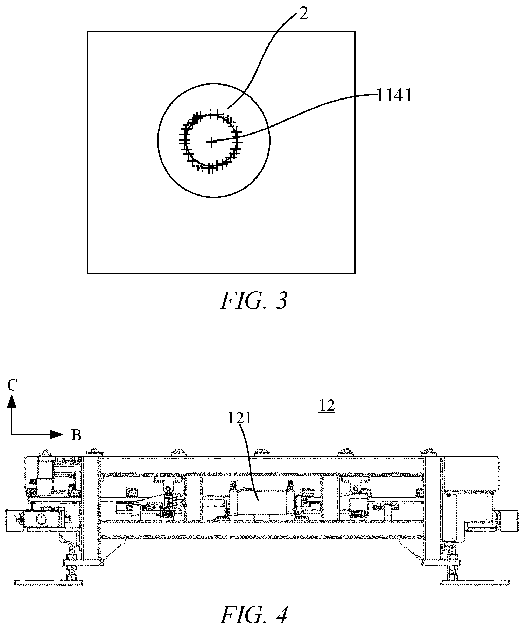

In the following embodiments, for ease of description, a pre-welding positioning system according to an embodiment will be described as an example. Reference is now made to FIG. 1, FIG 2, and FIG. 3. FIG. 1 is a schematic diagram of composition of a frame body in a pre-welding positioning system according to some embodiments, FIG. 2 is a schematic diagram of composition of a three-axis mechanism in a frame body according to some embodiments, and FIG. 3 is a schematic diagram showing an offset between a positioning component in a battery pack and a vision acquisition center of a vision acquisition system according to some embodiments. The following description is given in conjunction with FIG. 1 to FIG. 3. The pre-welding positioning system includes: a frame body 1, a controller (not shown), a three-axis mechanism 11 arranged on the frame body 1, and a vision acquisition system 114 and a fixing component 115 arranged on the three-axis mechanism 11.

The controller is configured to control the three-axis mechanism 11 to move to a designated position based on product information of a battery pack to be welded.

The vision acquisition system 114 is configured to acquire, at the designated position, an image of a positioning component 2 of the battery pack, in response to the three-axis mechanism 11 reaching the designated position; and determine a distance deviation value between the positioning component 2 and a preset reference point based on the acquired detection image.

The controller is further configured to control the three-axis mechanism 11 to drive the fixing component 115 to the positioning component 2 based on the distance deviation value so as to fix the battery pack to the frame body 1 by the fixing component 115.

The pre-welding positioning system is a system for positioning the battery pack to be welded (not shown). The pre-welding positioning system includes at least: the frame body 1, the controller, the three-axis mechanism 11 arranged on the frame body 1, and the vision acquisition system 114 and the fixing component 115 arranged on the three-axis mechanism 11. The controller may be a programmable logic controller (PLC) herein, and the controller may be configured to exchange information with the vision acquisition system 114 so as to control the vision acquisition system 114 to move to the designated position and perform associated acquisition operations.

Following the preceding description, there may be one three-axis mechanism 11 or two or more three-axis mechanisms 11 arranged on the frame body 1. When there are two or more three-axis mechanisms 11 arranged on the frame body 1, the two or more three-axis mechanisms 11 on the frame body 1 may be specifically disposed, for example, diagonally or in parallel.

In some embodiments, the three-axis mechanism 11 on the frame body 1 may be a three-axis servo intelligent positioning system, and as shown in FIG. 1, the three-axis mechanism 11 may include: an X-axis movement mechanism 111, a Y-axis movement mechanism 112, and a Z-axis movement mechanism 113, which can control an object to move in a first direction, i.e., in a direction where the X-axis movement mechanism 111 is located, control the object to move in a second direction, i.e., in a direction where the Y-axis movement mechanism is located, and also control the object to move in a third direction, i.e., in a direction where the Z-axis movement mechanism is located, namely, controlling a lifting movement of the object through controlling the Z-axis movement mechanism 113. That is, the three-axis servo intelligent positioning system can spatially position the object in three directions.

The vision acquisition system 114 arranged on the three-axis mechanism 11 is a machine vision system, which may be: a complementary metal oxide semiconductor (CMOS) image sensing system or a charge coupled device (CCD) image sensing system.

As shown in FIG. 2, the relative position relationship between the vision acquisition system 114 and the fixing component 115 arranged on the three-axis mechanism 11 can be set in advance by the pre-welding positioning system. The fixing component 115 may be: a fixing element such as a pin, a bolt, or a nut.

In some embodiments of the present disclosure, the fixing component 115 may be connected to or combined with the positioning component 2 of the battery pack to be welded, such that the battery pack to be welded is fixed to the frame body 1.

In some embodiments, the battery pack to be welded may be any type of battery pack. The pre-welding positioning system is configured to position the positioning component 2 of the battery pack to be welded, and herein, the battery pack may have one positioning component 2 or two or more positioning components 2. When the battery pack has two or more positioning components 2, the specific positions of the positioning components 2 on the battery pack may depend on actual requirements, for example, may be determined by an internal structural frame of the battery pack, or may be determined by a specific construction of the pre-welding positioning system.

The battery pack to be welded may be composed of at least one battery module and an associated case. Correspondingly, the product information of the battery pack to be welded may be blueprint information of the battery pack to be welded, where the blueprint information refers to position identification point (mark position) information in the battery pack to be welded, such as terminal post position information in the battery pack.

In some embodiments, the preset reference point may be a vision acquisition center 1141 in the vision acquisition system 114 or may be an acquisition reference point in the pre-welding positioning system. Correspondingly, the distance deviation value may refer to offset coordinates of the mark position relative to the vision acquisition center 1141.

The distance deviation value may be a numerical value in a two-dimensional plane coordinate system, which includes: a first deviation value in an X-axis direction and a second deviation value in a Y-axis direction.

Herein, the vision acquisition system 114 is further configured to send, after determining the distance deviation value between the positioning component 2 and the preset reference point, the distance deviation value to a storage module of the controller.

In some embodiments, in the pre-welding positioning system, the controller is configured to control, based on the product information of the battery pack to be welded such as the mark position in the battery pack to be welded, the three-axis mechanism 11 in the frame body 1 to move to the designated position such as a position directly above the battery pack to be welded. Therefore, the vision acquisition system 114 positioned on the three-axis mechanism 11 receives an acquisition instruction sent by the controller, in response to the three-axis mechanism 11 where it is positioned reaching the designated position, and acquires the image of the positioning component 2 (positioning hole) of the battery pack to be welded so as to obtain the detection image, and further sends the distance deviation value between the positioning component 2 and the preset reference point identified in the detection image to the controller. Furthermore, the controller can be configured to control the three-axis mechanism 11 to move once again based on the received distance deviation value so as to drive the fixing component 115 arranged thereon to move to the positioning component 2 of the battery pack to be welded, such as to the position directly above the positioning component 2 of the battery pack, so as to fix the battery pack to be welded to the frame body 1 by coupling of the fixing component 115 with the positioning component 2, thereby providing a foundation for subsequent welding of the battery pack to be welded.

As such, the vision acquisition system 114 arranged on the three-axis mechanism 11 acquires, at the designated position, the image of the positioning component 2 of the battery pack, in response to the controller controlling the three-axis mechanism 11 to reach the designated position, and obtains the distance deviation value between the positioning component 2 and the preset reference point, such that the controller controls the three-axis mechanism 11 to drive the fixing component 115 to the positioning component 2 based on the distance deviation value so as to fix the battery pack to the frame body 1 by the fixing component 115. In this way, the battery pack can be accurately positioned in the pre-welding positioning system, thereby improving the accuracy and efficiency of the battery pack in the welding process.

Before the welding of the battery pack, the battery pack to be welded is usually transported by a transport trolley (not shown) to a preset station, and the controller receives a positioning request sent by the transport trolley and controls a jacking mechanism to jack up the battery pack for positioning so as to implement the pre-welding positioning of the battery pack. As shown in FIG. 4, the frame body 1 is further provided with the jacking mechanism 12 on which a jacking cylinder 121 is arranged, and the jacking cylinder 121 extends to disengage the battery pack on the transport trolley from the transport trolley.

The controller is further configured to control the jacking cylinder 121 on the frame body 1 to extend to jack up the battery pack to a preset height, in response to the positioning request sent by the transport trolley; and then control the three-axis mechanism 11 to move to the designated position based on the product information.

In some embodiments, the transport trolley may be an automated guided vehicle (AGV), which is generally referred to as being equipped with an electromagnetic or optic automated guided device and thus being capable of traveling along a defined guiding path for assisted logistics transport.

The battery pack to be welded is loaded on the transport trolley before the battery pack to be welded enters the corresponding preset station of the pre-welding positioning system.

In some embodiments, the jacking cylinder 121 arranged on the jacking mechanism 12 is a hydraulic device for lifting the battery pack. When the jacking cylinder 121 extends, the battery pack is jacked up to the preset height.

The jacking height may be determined in advance by other control devices in the pre-welding positioning system or by the controller based on basic properties of the jacking cylinder 121.

In some embodiments, the controller is configured to obtain a positioning request sent by the transport trolley when the battery pack thereon reaches the preset station, and then control the three-axis mechanism 11 to move to the designated position. The preset station may be a pre-welding station corresponding to the pre-welding positioning system. Therefore, the controller can be configured to control the jacking cylinder 121 to extend to jack up the battery pack to the preset height, in response to the received positioning request, such that the battery pack is disengaged from the transport trolley and the battery pack is jacked to a fixed position, thereby facilitating a further operation, for example, the controller controlling the three-axis mechanism 11 to move to the designated position based on the product information of the battery pack.

As such, the battery pack on the transport trolley is jacked up by the jacking mechanism 12 arranged on the frame body 1, such that the battery pack is disengaged from the transport trolley, thereby providing a foundation for subsequent pre-welding positioning of the battery pack.

In some embodiments, the controller can compare the product information of the battery pack on the transport trolley to the pre-stored information to be compared of the battery pack in the pre-welding positioning system, which can reduce the probability that the battery pack entering the pre-welding positioning system does not meet the expectation.

The controller is further configured to obtain the read product information of the battery pack and the information to be compared of the battery pack, in response to the positioning request sent by the transport trolley; and
control the jacking cylinder 121 to extend in response to the product information being consistent with the information to be compared.

In some embodiments, the information to be compared of the battery pack may be default product information of battery packs allowed for pre-welding positioning in the pre-welding positioning system. The controller is configured to compare the product information of the battery pack to be welded entering the pre-welding positioning system to the information to be compared.

When both the product information of the battery pack and the information to be compared of the battery pack include a plurality of pieces of terminal post position information, the pieces of terminal post position information included in the product information are compared correspondingly to the pieces of terminal post position information included in the information to be compared based on the position information so as to obtain a comparison result. If the comparison result indicates that the pieces of terminal post position information included in the product information are all consistent with the pieces of terminal post position information included in the information to be compared, it indicates that the product information is consistent with the information to be compared.

In some embodiments, the controller can be configured to obtain the product information on the battery pack to be welded based on radio frequency identification (RFID), in response to the positioning request sent by the transport trolley, and control, when the product information is consistent with information to be compared issued by a manufacturing execution system (MES) where the pre-welding positioning system is located, the jacking cylinder 121 arranged on the frame body 1 to extend to complete the action of the cylinder.

It should be noted that the RFID is non-contact data communication between a reader and a tag to achieve the purpose of identifying a target.

In some embodiments, the controller can be configured to control the jacking cylinder 121 on the frame body 1 to extend only when read battery information of the battery pack entering the preset station is consistent with the pre-stored information to be compared of the battery pack in the system, or stop the corresponding operation (e.g., to control the jacking cylinder 121 to extend) and send alarm information when the read battery information of the battery pack entering the preset station is inconsistent with the pre-stored information to be compared of the battery pack in the system. The alarm information may be, for example, information in a human machine interface (HMI), and/or a sound-light alarm.

As such, the controller can compare the product information of the battery pack on the transport trolley to the pre-stored information to be compared in the pre-welding positioning system, which can reduce the probability that the battery pack entering the pre-welding positioning system does not meet the expectation, thereby providing a foundation for subsequent accurate pre-welding positioning of the battery pack by means of the foolproof measures.

In some embodiments, the vision acquisition system 114 is further configured to send the distance deviation value to the storage module of the controller; and the distance deviation value includes: the first deviation value in the X-axis direction and the second deviation value in the Y-axis direction in the two-dimensional plane coordinate system.

In some embodiments, the distance deviation value is the numerical value in the two-dimensional plane coordinate system, which includes: the first deviation value in the X-axis direction and the second deviation value in the Y-axis direction. Numerical values corresponding to the first deviation value and the second deviation value may or may not be equal, and a unit corresponding to the first deviation value and the second deviation value may be expressed in millimeters or centimeters.

As such, the vision acquisition system 114 is configured to send the obtained distance deviation value to the storage module of the controller, so that the controller can subsequently perform data storage and security management of the distance deviation value.

In some embodiments, the controller can be configured to control the X-axis movement mechanism 111, the Y-axis movement mechanism 112, and the Z-axis movement mechanism 113 on the three-axis mechanism 11 to move, respectively, such that the fixing component 115 arranged on the three-axis mechanism 11 is inserted into the positioning component 2.

The controller is further configured to control the X-axis movement mechanism 111 and the Y-axis movement mechanism 112 on the three-axis mechanism 11 to move based respectively on the first deviation value and the second deviation value, such that the fixing component 115 moves to the position directly above the positioning component 2.

The controller is further configured to control the Z-axis movement mechanism 113 on the three-axis mechanism 11 to descend to the preset height, in response to the fixing component 115 reaching the position directly above the positioning component 2, such that the fixing component 115 is inserted into the positioning component 2.

In some embodiments, planar movement mechanisms on the three-axis mechanism 11, i.e., the X-axis movement mechanism 111 and the Y-axis movement mechanism 112 can be controlled to move based respectively on the first deviation value and the second deviation value, and the Z-axis movement mechanism 113 on the three-axis mechanism 11 can be controlled to move, in other words, movement in the three directions cooperate to implement the spatial positioning, such that the fixing component 115 arranged on the three-axis mechanism 11 may be automatically inserted into the positioning component 2 of the battery pack to be welded.

Following the preceding description, the controller is further configured to control the jacking cylinder 121 on the frame body 1 to extend to jack up the battery pack to the preset height, in response to the positioning request sent by the transport trolley, and correspondingly, the controller is further configured to control the Z-axis movement mechanism 113 on the three-axis mechanism 11 to descend to the preset height.

As such, the controller is further configured to control the X-axis movement mechanism 111 and the Y-axis movement mechanism 112 on the three-axis mechanism 11 to move to the position directly above the positioning component 2 and control the Z-axis movement mechanism 113 on the three-axis mechanism 11 to descend to the preset height based respectively on the first deviation value, the second deviation value, and the battery pack jacked up to the preset height, such that the fixing component 115 arranged on the three-axis mechanism 11 is automatically inserted into the positioning component 2 of the battery pack. In this way, the fixing component 115 is inserted into the positioning component 2 accurately through multi-dimensional adjustment.

In some embodiments, the controller is further configured to determine a first compensated distance value corresponding to the X-axis movement mechanism 111 based on the first deviation value and determine a second compensated distance value corresponding to the Y-axis movement mechanism 112 based on the second deviation value.

The controller is further configured to control the X-axis movement mechanism 111 to move based on the first compensated distance value and control the Y-axis movement mechanism 112 to move based on the second compensated distance value, such that the fixing component 115 moves to the position directly above the positioning component 2.

In some embodiments, the first compensated distance value is equal to the first deviation value, and correspondingly, the second compensated distance value is equal to the second deviation value. Alternatively, a mapping relationship exists between the first compensated distance value and the first deviation value, such that the second compensated distance value corresponding to the second deviation value may be determined based on the mapping relationship.

Herein, the controller can be further configured to simultaneously control the X-axis movement mechanism 111 to move based on the first compensated distance value and control the Y-axis movement mechanism 112 to move based on the second compensated distance value. Alternatively, the controller can be configured to first control the X-axis movement mechanism 111 to move based on the first compensated distance value and then control the Y-axis movement mechanism 112 to move based on the second compensated distance value, such that the fixing component 115 moves to the position directly above the positioning component 2.

As such, the controller is configured to control the X-axis movement mechanism 111 to move based on the first compensated distance value corresponding to the first deviation value and control the Y-axis movement mechanism 112 to move based on the second compensated distance value corresponding to the second deviation value, respectively. In this way, the fixing component 115 on the three-axis mechanism 11 can be controlled to be accurately positioned directly above the positioning component 2.

In some embodiments, a lower frame body and an upper frame body (not shown) are provided on the frame body 1, the jacking mechanism 12 is arranged on the lower frame body, a truss is arranged on the upper frame body, and two three-axis mechanisms 11 are arranged on the truss. The transport trolley transports the battery pack in a preset direction into a preset station corresponding to the frame body 1, and after the battery pack is disengaged from the transport trolley, the transport trolley pulls out of the preset station in a direction opposite to the preset direction.

The two three-axis mechanisms 11 are configured to fix positioning components 2 located on two opposite corners of the battery pack.

In some embodiments, the frame body 1 may be composed of the upper and lower frame bodies, and the jacking mechanism 12 (including at least the jacking cylinder 121) is arranged on the lower frame body, such that the jacking cylinder 121 in the lower frame body extends under the control of the controller to disengage the battery pack on the transport trolley from the transport trolley, thereby jacking up the battery pack to the preset height. Correspondingly, the truss is arranged on the upper frame body of the frame body 1, and the two three-axis mechanisms 11 are arranged on the truss so as to fix the positioning components 2 located on the two opposite corners of the battery pack under the control of the controller.

The truss may refer to a three-axis structure of a gantry type truss manipulator, and may include: an X-axis (including left and right beams) and a Y-axis, where the Y-axis straddles the two beams of the X-axis to form a gantry structure. The two three-axis mechanisms 11 may be arranged in parallel on the Y-axis or the X-axis of the truss. The preset direction may be a direction corresponding to the Y-axis or the X-axis of the truss.

The two three-axis mechanisms 11 may be diagonally arranged on the truss. Correspondingly, the two three-axis mechanisms 11 are configured to fix the positioning components 2 located on the two opposite corners of the battery pack. Herein, fixing components 115 arranged on the two three-axis mechanisms 11 may be respectively inserted into the positioning components 2 located on the two opposite corners of the battery pack so as to fix the battery pack to the frame body 1. Therefore, the battery pack is parallel to an associated direction of the truss and a movement direction of a welding robot in a welding process, implementing automatic and accurate positioning prior to welding.

As such, the positioning components 2 located on the two opposite corners of the battery pack are respectively fixed by the two three-axis mechanisms 11, such that the fixation between the battery pack and the frame body 1 is more stable and secure.

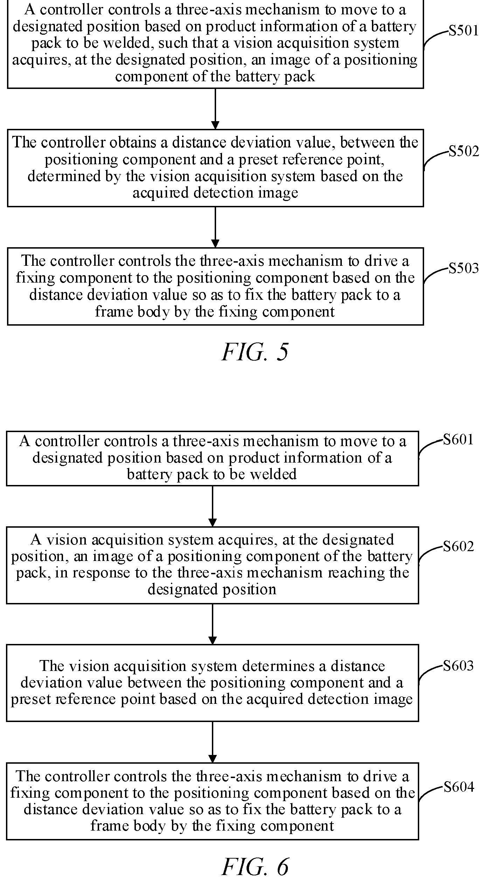

Correspondingly, an embodiment further provides a pre-welding positioning method. The pre-welding positioning method may be applied to a controller of the pre-welding positioning system according to any one of the above embodiments. In any case, the pre-welding positioning system includes: a frame body, a three-axis mechanism arranged on the frame body, and a vision acquisition system and a fixing component arranged on the three-axis mechanism. With reference to FIG. 5, the pre-welding positioning method includes the following steps.

In step S501, the controller controls the three-axis mechanism to move to a designated position based on product information of a battery pack to be welded, such that the vision acquisition system acquires, at the designated position, an image of a positioning component of the battery pack.

In step S502, the controller obtains a distance deviation value, between the positioning component and a preset reference point, determined by the vision acquisition system based on the acquired detection image.

In step S503, the controller controls the three-axis mechanism to drive the fixing component to the positioning component based on the distance deviation value so as to fix the battery pack to the frame body by the fixing component.

In some embodiments, for a detailed description of the controller, the vision acquisition system, etc., reference may be made to the above detailed description of the pre-welding positioning system.

First, the controller controls, based on the product information of the battery pack to be welded such as a plurality of pieces of terminal post position information in the battery pack, the three-axis mechanism to move to the designated position (such as a preset image acquisition position), such that the vision acquisition system acquires, at the designated position, the image of the positioning component of the battery pack. Next, the controller obtains the distance deviation value, between the positioning component and the preset reference point, determined by the vision acquisition system based on the acquired detection image (such as a distance deviation value between the positioning component and a vision acquisition center of the vision acquisition system). Finally, the controller controls the three-axis mechanism to drive the fixing component to the positioning component based on the distance deviation value so as to fix the battery pack to the frame body by the fixing component.

For further details of the implementation, reference may be made to the detailed description of the pre-welding positioning system in the above embodiments, which will not be repeated herein.

As such, the vision acquisition system arranged on the three-axis mechanism acquires, at the designated position, the image of the positioning component of the battery pack, in response to the controller controlling the three-axis mechanism to reach the designated position, and obtains the distance deviation value between the positioning component and the preset reference point, such that the controller controls the three-axis mechanism to drive the fixing component to the positioning component based on the distance deviation value so as to fix the battery pack to the frame body by the fixing component. In this way, the battery pack can be accurately positioned in the pre-welding positioning system, thereby improving the accuracy and efficiency of the battery pack in the welding process.

In some embodiments, the frame body is provided with a jacking mechanism on which a jacking cylinder is arranged, and before the controller controls the three-axis mechanism to move to the designated position based on the product information of the battery pack to be welded, the pre-welding positioning method further includes the following step.

In step A, the controller controls the jacking cylinder to extend to jack up the battery pack on a transport trolley to a preset height, in response to a positioning request sent by the transport trolley, such that the battery pack on the transport trolley is disengaged from the transport trolley.

In some embodiments, the controller controls the jacking cylinder to extend in response to the positioning request sent by the transport trolley. To be specific, step A provided in the above embodiments further includes the following steps.

In step A1, the controller obtains the read product information of the battery pack and information to be compared of the battery pack, in response to the positioning request sent by the transport trolley.

In step A2, the controller controls the jacking cylinder to extend in response to the product information being consistent with the information to be compared.

In some embodiments, the pre-welding positioning method may further implement the following step B.

In step B, the controller obtains the distance deviation value sent by the vision acquisition system and stores the distance deviation value to a storage module; and the distance deviation value includes: a first deviation value in an X-axis direction and a second deviation value in a Y-axis direction in a two-dimensional plane coordinate system.

Correspondingly, the distance deviation value includes: the first deviation value in the X-axis direction and the second deviation value in the Y-axis direction in the two-dimensional plane coordinate system. For controlling the three-axis mechanism to drive the fixing component to the positioning component based on the distance deviation value, the pre-welding positioning method further includes steps C1 and C2 below.

In step C1, the controller controls an X-axis movement mechanism and a Y-axis movement mechanism on the three-axis mechanism to move based respectively on the first deviation value and the second deviation value, such that the fixing component moves to a position directly above the positioning component.

In step C2, the controller controls a Z-axis movement mechanism on the three-axis mechanism to descend to the preset height, in response to the fixing component reaching the position directly above the positioning component, such that the fixing component is inserted into the positioning component.

In some embodiments of the present disclosure, step C1 above may be further implemented by the following steps.

In step C11, the controller determines a first compensated distance value corresponding to the X-axis movement mechanism based on the first deviation value and determines a second compensated distance value corresponding to the Y-axis movement mechanism based on the second deviation value.

In step C12, the controller controls the X-axis movement mechanism to move based on the first compensated distance value and controls the Y-axis movement mechanism to move based on the second compensated distance value, such that the fixing component moves to the position directly above the positioning component.

For further details of implementations of step A (including step A1 and step A2), step B, step C1 (including step C11 and step C12), step C2, and corresponding effects thereof, reference may be made to the detailed description of the pre-welding positioning system in the above embodiments, which will not be repeated herein.

Correspondingly, an embodiment further provides a pre-welding positioning method, and the pre-welding positioning method may be applied to the pre-welding positioning system according to any one of the above embodiments. In any case, the pre-welding positioning system includes: a frame body, a controller, a three-axis mechanism arranged on the frame body, and a vision acquisition system and a fixing component arranged on the three-axis mechanism. As shown in FIG. 6, the method includes the following steps.

In step S601, the controller controls the three-axis mechanism to move to a designated position based on product information of a battery pack to be welded.

In step S602, the vision acquisition system acquires, at the designated position, an image of a positioning component of the battery pack, in response to the three-axis mechanism reaching the designated position.

In step S603, the vision acquisition system determines a distance deviation value between the positioning component and a preset reference point based on the acquired detection image.

In step S604, the controller controls the three-axis mechanism to drive the fixing component to the positioning component based on the distance deviation value so as to fix the battery pack to the frame body by the fixing component.

In some embodiments, the pre-welding positioning method may be applied to the pre-welding positioning system according to any one of the above embodiments. For a detailed description of the controller, the vision acquisition system, etc., in the pre-welding positioning system, reference may be made to the above detailed description of the pre-welding positioning system.

For further details of the implementation, reference may be made to the detailed description of the pre-welding positioning system in the above embodiments, which will not be repeated herein.

Finally, it should be noted that the foregoing embodiments are merely used for illustrating rather than limiting the technical solutions of the present invention as defined in the appended claims.

### Industrial applicability

The embodiments of the present invention enable a battery pack to be accurately positioned in a pre-welding positioning system, thereby improving the accuracy and efficiency of the battery pack in the welding process.

## Claims

1. A pre-welding positioning system, comprising: a frame body (1), a controller, a three-axis
mechanism (11) arranged on the frame body (1), and a vision acquisition system (114) arranged on the three-axis mechanism (11), wherein
the controller is configured to control the three-axis mechanism (11) to move to a designated position based on product information of a battery pack to be welded;
the pre-welding positioning system is **characterised in that**:
a fixing component (115) is arranged on the three-axis mechanism (11);
the vision acquisition system (114) is configured to acquire, at the designated position, an image of a positioning component (2) of the battery pack, in response to the three-axis mechanism (11) reaching the designated position; and determine a distance deviation value between the positioning component (2) and a preset reference point based on the acquired detection image; and
the controller is further configured to control the three-axis mechanism (11) to drive the fixing component (115) to the positioning component (2) based on the distance deviation value so as to fix the battery pack to the frame body (1) by the fixing component (115).

2. The pre-welding positioning system according to claim 1, wherein the frame body (1) is further provided with a jacking mechanism (12) on which a jacking cylinder (121) is arranged, and the jacking cylinder (121) extends to disengage the battery pack on a transport trolley from the transport trolley; and
the controller is further configured to control the jacking cylinder (121) to extend to jack up the battery pack to a preset height, in response to a positioning request sent by the transport trolley; and then control the three-axis mechanism (11) to move to the designated position based on the product information.

3. The pre-welding positioning system according to claim 2, wherein
the controller is further configured to obtain the read product information of the battery pack and information to be compared of the battery pack, in response to the positioning request sent by the transport trolley; and
control the jacking cylinder (121) to extend in response to the product information being consistent with the information to be compared.

4. The pre-welding positioning system according to any one of claims 1 to 3, wherein
the vision acquisition system (114) is further configured to send the distance deviation value to a storage module of the controller; and the distance deviation value comprises: a first deviation value in an X-axis direction and a second deviation value in a Y-axis direction in a two-dimensional plane coordinate system.

5. The pre-welding positioning system according to claim 4, wherein
the controller is further contigured to control an X-axis movement mechanism (111) and a Y-axis movement mechanism (112) on the three-axis mechanism (11) to move based respectively on the first deviation value and the second deviation value, such that the fixing component (115) moves to a position directly above the positioning component (2); and
the controller is further configured to control a Z-axis movement mechanism (113) on the three-axis mechanism (11) to descend to the preset height, in response to the fixing component (115) reaching the position directly above the positioning component (2), such that the fixing component (115) is inserted into the positioning component (2).

6. The pre-welding positioning system according to claim 5, wherein
the controller is further configured to determine a first compensated distance value corresponding to the X-axis movement mechanism (111) based on the first deviation value and determine a second compensated distance value corresponding to the Y-axis movement mechanism (112) based on the second deviation value; and
the controller is further configured to control the X-axis movement mechanism (111) to move based on the first compensated distance value and control the Y-axis movement mechanism (112) to move based on the second compensated distance value, such that the fixing component (115) moves to the position directly above the positioning component (2).

7. The pre-welding positioning system according to any one of claims 1 to 6, wherein a lower frame body and an upper frame body are provided on the frame body (1), the jacking mechanism (12) is arranged on the lower frame body, a truss is arranged on the upper frame body, and two three-axis mechanisms (11) are arranged on the truss; and the transport trolley transports the battery pack in a preset direction into a preset station corresponding to the frame body (1), and after the battery pack is disengaged from the transport trolley, the transport trolley pulls out of the preset station in a direction opposite to the preset direction; and
the two three-axis mechanisms (11) are configured to fix positioning components (2) located on two opposite corners of the battery pack.

8. A pre-welding positioning method, applied to a controller of a pre-welding positioning system, the pre-welding positioning system comprising: a frame body (1), a three-axis mechanism (11) arranged on the frame body (1), and a vision acquisition system (114) arranged on the three-axis mechanism (11), wherein
the controller controls the three-axis mechanism (11) to move to a designated position based on product information of a battery pack to be welded, such that the vision acquisition system (114) acquires, at the designated position, an image of a positioning component (2) of the battery pack;
the pre-welding positioning method being **characterised by**:
arranging a fixing component (115) on the three-axis mechanism (11);
the controller obtaining a distance deviation value, between the positioning component (2) and a preset reference point, determined by the vision acquisition system (114) based on the acquired detection image, and controlling the three-axis mechanism (11) to drive the fixing component (115) to the positioning component (2) based on the distance deviation value so as to fix the battery pack to the frame body (1) by the fixing component (115).

9. The pre-welding positioning method according to claim 8, wherein the frame body (1) is provided with a jacking mechanism (12) on which a jacking cylinder (121) is arranged, and before the controller controls the three-axis mechanism (11) to move to the designated position based on the product information of the battery pack to be welded, the pre-welding positioning method further comprises:
the controller controlling the jacking cylinder (121) to extend to jack up the battery pack on a transport trolley to a preset height, in response to a positioning request sent by the transport trolley, such that the battery pack on the transport trolley is disengaged from the transport trolley.

10. The pre-welding positioning method according to claim 9, wherein the controller controlling the jacking cylinder (121) to extend in response to the positioning request sent by the transport trolley comprises:
the controller obtaining the read product information of the battery pack and information to be compared of the battery pack, in response to the positioning request sent by the transport trolley; and
controlling the jacking cylinder (121) to extend in response to the product information being consistent with the information to be compared.

11. The pre-welding positioning method according to any one of claims 8 to 10, wherein the distance deviation value comprises: a first deviation value in an X-axis direction and a second deviation value in a Y-axis direction in a two-dimensional plane coordinate system; and controlling the three-axis mechanism (11) to drive the fixing component (115) to the positioning component (2) based on the distance deviation value comprises:
the controller controlling an X-axis movement mechanism (111) and a Y-axis movement mechanism (112) on the three-axis mechanism (11) to move based respectively on the first deviation value and the second deviation value, such that the fixing component (115) moves to a position directly above the positioning component (2); and
controlling a Z-axis movement mechanism (113) on the three-axis mechanism (11) to descend to the preset height, in response to the fixing component (115) reaching the position directly above the positioning component (2), such that the fixing component (115) is inserted into the positioning component (2).

12. The pre-welding positioning method according to claim 11, wherein the controller controlling the X-axis movement mechanism (111) and the Y-axis movement mechanism (112) on the three-axis mechanism (11) to move based respectively on the first deviation value and the second deviation value, such that the fixing component (115) moves to the position directly above the positioning component (2) comprises:
the controller determining a first compensated distance value corresponding to the X-axis movement mechanism (111) based on the first deviation value and determining a second compensated distance value corresponding to the Y-axis movement mechanism (112) based on the second deviation value; and
controlling the X-axis movement mechanism (111) to move based on the first compensated distance value and controlling the Y-axis movement mechanism (112) to move based on the second compensated distance value, such that the fixing component (115) moves to the position directly above the positioning component (2).

13. A pre-welding positioning method, applied to a pre-welding positioning system, the pre-welding positioning system comprising: a frame body (1), a controller, a three-axis mechanism (11) arranged on the frame body (1), and a vision acquisition system (114) arranged on the three-axis mechanism (11), wherein
the controller controls the three-axis mechanism (11) to move to a designated position based on product information of a battery pack to be welded;
the pre-welding positioning method being **characterised in that**:
a fixing component (115) is arranged on the three-axis mechanism (11);
the vision acquisition system (114) acquires, at the designated position, an image of a positioning component (2) of the battery pack, in response to the three-axis mechanism (11) reaching the designated position;
the vision acquisition system (114) determines a distance deviation value between the positioning component (2) and a preset reference point based on the acquired detection image; and
the controller controls the three-axis mechanism (11) to drive the fixing component (115) to the positioning component (2) based on the distance deviation value so as to fix the battery pack to the frame body (1) by the fixing component (115).

## Patentansprüche

1. Vorschweißpositionierungssystem, das Folgendes umfasst: einen Rahmenkörper (1), eine Steuerung, einen Dreiachsenmechanismus (11), der an dem Rahmenkörper (1) angeordnet ist, und ein Sichterfassungssystem (114), das an dem Dreiachsenmechanismus (11) angeordnet ist, wobei die Steuerung dazu ausgelegt ist, den Dreiachsenmechanismus (11) zu steuern, um sich basierend auf Produktinformationen eines zu schweißenden Batteriepacks zu einer bestimmten Position zu bewegen;
das Vorschweißpositionierungssystem **dadurch gekennzeichnet ist, dass**:
eine Befestigungskomponente (115) an dem Dreiachsenmechanismus (11) angeordnet ist;
das Sichterfassungssystem (114) ausgelegt ist zum Erfassen, an der bestimmten Position, eines Bildes einer Positionierungskomponente (2) des Batteriepacks als Reaktion darauf, dass der Dreiachsenmechanismus (11) die bestimmte Position erreicht; und Bestimmen eines Abstandsabweichungswerts zwischen der Positionierungskomponente (2) und einem voreingestellten Referenzpunkt basierend auf dem erfassten Detektionsbild; und
die Steuerung ferner ausgelegt ist zum Steuern des Dreiachsenmechanismus (11), um die Befestigungskomponente (115) basierend auf dem Abstandsabweichungswert zur Positionierungskomponente (2) zu treiben, um das Batteriepack durch die Befestigungskomponente (115) an dem Rahmenkörper (1) zu befestigen.

2. Vorschweißpositionierungssystem nach Anspruch 1, wobei der Rahmenkörper (1) ferner mit einem Anhebemechanismus (12) versehen ist, an dem ein Anhebezylinder (121) angeordnet ist, und wobei der Anhebezylinder (121) ausfährt, um das Batteriepack auf einem Transportwagen von dem Transportwagen zu lösen; und
die Steuerung ferner ausgelegt ist zum Steuern des Anhebezylinders (121), um auszufahren, um den Batteriepack auf eine voreingestellte Höhe anzuheben, als Reaktion auf eine Positionierungsanforderung, die durch den Transportwagen gesendet wird; und dann Steuern des Dreiachsenmechanismus (11), um sich basierend auf den Produktinformationen zu der bestimmten Position zu bewegen.

3. Vorschweißpositionierungssystem nach Anspruch 2, wobei
die Steuerung ferner ausgelegt ist zum Erhalten der gelesenen Produktinformationen des Batteriepacks und Informationen, die mit dem Batteriepack verglichen werden sollen, als Reaktion auf die durch den Transportwagen gesendete Positionierungsanforderung; und
Steuern des Anhebezylinders (121), um auszufahren in Reaktion darauf, dass die Produktinformationen mit den zu vergleichenden Informationen übereinstimmen.

4. Vorschweißpositionierungssystem nach einem der Ansprüche 1 bis 3, wobei:
das Sichterfassungssystem (114) ferner ausgelegt ist zum Senden des Abstandsabweichungswerts an ein Speichermodul der Steuerung; und wobei der Abstandsabweichungswert Folgendes umfasst: einen ersten Abweichungswert in einer X-Achsenrichtung und einen zweiten Abweichungswert in einer Y-Achsenrichtung in einem zweidimensionalen Ebenenkoordinatensystem.

5. Vorschweißpositionierungssystem nach Anspruch 4, wobei
die Steuerung ferner ausgelegt ist zum Steuern eines X-Achsen-Bewegungsmechanismus (111) und eines Y-Achsen-Bewegungsmechanismus (112) an dem Dreiachsenmechanismus (11), um sich basierend auf dem ersten Abweichungswert bzw. dem zweiten Abweichungswert zu bewegen, so dass sich die Befestigungskomponente (115) zu einer Position direkt über der Positionierungskomponente (2) bewegt; und
die Steuerung ferner ausgelegt ist zum Steuern eines Z-Achsen-Bewegungsmechanismus (113) an dem Dreiachsenmechanismus (11), um als Reaktion darauf, dass die Befestigungskomponente (115) die Position direkt über der Positionierungskomponente (2) erreicht, auf die voreingestellte Höhe abzusinken, sodass die Befestigungskomponente (115) in die Positionierungskomponente (2) eingesetzt wird.

6. Vorschweißpositionierungssystem nach Anspruch 5, wobei
die Steuerung ferner ausgelegt ist zum Bestimmen eines ersten kompensierten Abstandswerts, der dem X-Achsen-Bewegungsmechanismus (111) entspricht, basierend auf dem ersten Abweichungswert und eines zweiten kompensierten Abstandswerts, der dem Y-Achsen-Bewegungsmechanismus (112) entspricht, basierend auf dem zweiten Abweichungswert; und
die Steuerung ferner ausgelegt ist zum Steuern des X-Achsen-Bewegungsmechanismus (111), um sich basierend auf dem ersten kompensierten Abstandswert zu bewegen, und Steuern des Y-Achsen-Bewegungsmechanismus (112), um sich basierend auf dem zweiten kompensierten Abstandswert zu bewegen, so dass sich die Befestigungskomponente (115) zu der Position direkt über der Positionierungskomponente (2) bewegt.

7. Vorschweißpositionierungssystem nach einem der Ansprüche 1 bis 6, wobei ein unterer Rahmenkörper und ein oberer Rahmenkörper an dem Rahmenkörper (1) bereitgestellt sind, der Anhebemechanismus (12) an dem unteren Rahmenkörper angeordnet ist, ein Fachwerk an dem oberen Rahmenkörper angeordnet ist und zwei Dreiachsenmechanismen (11) an dem Fachwerk angeordnet sind; und wobei der Transportwagen das Batteriepack in einer vorgegebenen Richtung in eine vorgegebene Station transportiert, die dem Rahmenkörper (1) entspricht, und wobei, nachdem das Batteriepack von dem Transportwagen gelöst ist, sich der Transportwagen entgegen der vorgegebenen Richtung aus der vorgegebenen Station herausbewegt; und
die zwei Dreiachsenmechanismen (11) ausgelegt sind zum Befestigen von Positionierungskomponenten (2), die sich an zwei gegenüberliegenden Ecken des Batteriepacks befinden.

8. Vorschweißpositionierungsverfahren, angewendet auf eine Steuerung eines Vorschweißpositionierungssystems, wobei das Vorschweißpositionierungssystem Folgendes umfasst: einen Rahmenkörper (1), einen Dreiachsenmechanismus (11), der an dem Rahmenkörper (1) angeordnet ist, und ein Sichterfassungssystem (114), das an dem Dreiachsenmechanismus (11) angeordnet ist, wobei
die Steuerung den Dreiachsenmechanismus (11) steuert, um sich basierend auf Produktinformationen eines zu schweißenden Batteriepacks zu einer bestimmten Position zu bewegen, so dass das Sichterfassungssystem (114) an der bestimmten Position ein Bild einer Positionierungskomponente (2) des Batteriepacks erfasst;
wobei das Vorschweißpositionierungsverfahren **gekennzeichnet ist durch**:
Anordnen einer Befestigungskomponente (115) an dem Dreiachsenmechanismus (11);
wobei die Steuerung einen Abstandsabweichungswert zwischen der Positionierungskomponente (2) und einem voreingestellten Referenzpunkt erhält, der **durch** das Sichterfassungssystem (114) basierend auf dem erfassten Detektionsbild bestimmt wird, und Steuern des Dreiachsenmechanismus (11), um die Befestigungskomponente (115) basierend auf dem Abstandsabweichungswert zur Positionierungskomponente (2) zu treiben, um das Batteriepack durch die Befestigungskomponente (115) an dem Rahmenkörper (1) zu befestigen.

9. Vorschweißpositionierungsverfahren nach Anspruch 8, wobei der Rahmenkörper (1) mit einem Anhebemechanismus (12) versehen ist, an dem ein Anhebezylinder (121) angeordnet ist, und wobei, bevor die Steuerung den Dreiachsenmechanismus (11) steuert, um sich basierend auf den Produktinformationen des zu schweißenden Batteriepacks zu der bestimmten Position zu bewegen, das Vorschweißpositionierungsverfahren ferner Folgendes umfasst:
Steuern, durch die Steuerung, des Anhebezylinders (121), sodass er ausfährt, um, in Reaktion auf eine vom Transportwagen gesendete Positionierungsanforderung, den Batteriepack auf einem Transportwagen auf eine vorgegebene Höhe anzuheben, sodass der Batteriepack auf dem Transportwagen von dem Transportwagen gelöst wird.

10. Vorschweißpositionierungsverfahren nach Anspruch 9, wobei die Steuerung, die den Anhebezylinder (121) steuert, um, als Reaktion auf die Positionierungsanforderung, die durch den Transportwagen gesendet wird, auszufahren, Folgendes umfasst:
Erhalten, durch die Steuerung, der gelesenen Produktinformationen des Batteriepacks und Informationen, die, als Reaktion auf die durch den Transportwagen gesendete Positionierungsanforderung, mit dem Batteriepack verglichen werden sollen; und
Steuern des Anhebezylinders (121), um auszufahren in Reaktion darauf, dass die Produktinformationen mit den zu vergleichenden Informationen übereinstimmen.

11. Vorschweißpositionierungsverfahren nach einem der Ansprüche 8 bis 10, wobei der Abstandsabweichungswert Folgendes umfasst: einen ersten Abweichungswert in einer X-Achsenrichtung und einen zweiten Abweichungswert in einer Y-Achsenrichtung in einem zweidimensionalen Ebenenkoordinatensystem; und wobei Steuern des Dreiachsenmechanismus (11) zum Treiben der Befestigungskomponente (115) zur Positionierungskomponente (2) basierend auf dem Abstandsabweichungswert Folgendes umfasst:
Steuern, durch die Steuerung, eines X-Achsen-Bewegungsmechanismus (111) und eines Y-Achsen-Bewegungsmechanismus (112) an dem Dreiachsenmechanismus (11), um sich basierend auf dem ersten Abweichungswert bzw. dem zweiten Abweichungswert zu bewegen, so dass sich die Befestigungskomponente (115) zu einer Position direkt über der Positionierungskomponente (2) bewegt; und
Steuern eines Z-Achsen-Bewegungsmechanismus (113) an dem Dreiachsenmechanismus (11), um als Reaktion darauf, dass die Befestigungskomponente (115) die Position direkt über der Positionierungskomponente (2) erreicht, auf die voreingestellte Höhe abzusinken, sodass die Befestigungskomponente (115) in die Positionierungskomponente (2) eingesetzt wird.

12. Vorschweißpositionierungsverfahren nach Anspruch 11, wobei die Steuerung, die den X-Achsen-Bewegungsmechanismus (111) und den Y-Achsen-Bewegungsmechanismus (112) an dem Dreiachsenmechanismus (11) steuert, um sich basierend auf dem ersten Abweichungswert bzw. dem zweiten Abweichungswert zu bewegen, sodass sich die Befestigungskomponente (115) zu der Position direkt über der Positionierungskomponente (2) bewegt, Folgendes umfasst:
Bestimmen, durch die Steuerung, eines ersten kompensierten Abstandswerts, der dem X-Achsen-Bewegungsmechanismus (111) entspricht, basierend auf dem ersten Abweichungswert, und eines zweiten kompensierten Abstandswerts, der dem Y-Achsen-Bewegungsmechanismus (112) entspricht, basierend auf dem zweiten Abweichungswert; und
Steuern des X-Achsen-Bewegungsmechanismus (111), um sich basierend auf dem ersten kompensierten Abstandswert zu bewegen, und Steuern des Y-Achsen-Bewegungsmechanismus (112), um sich basierend auf dem zweiten kompensierten Abstandswert zu bewegen, so dass sich die Befestigungskomponente (115) zu der Position direkt über der Positionierungskomponente (2) bewegt.

13. Vorschweißpositionierungsverfahren, angewendet auf ein Vorschweißpositionierungssystem, wobei das Vorschweißpositionierungssystem Folgendes umfasst: einen Rahmenkörper (1), eine Steuerung, einen Dreiachsenmechanismus (11), der an dem Rahmenkörper (1) angeordnet ist, und ein Sichterfassungssystem (114), das an dem Dreiachsenmechanismus (11) angeordnet ist, wobei
die Steuerung den Dreiachsmechanismus (11) steuert, um sich basierend auf Produktinformationen eines zu schweißenden Batteriepacks zu einer bestimmten Position zu bewegen;
wobei das Vorschweißpositionierungsverfahren **dadurch gekennzeichnet ist, dass**:
eine Befestigungskomponente (115) an dem Dreiachsenmechanismus (11) angeordnet ist;
das Sichterfassungssystem (114) an der bestimmten Position ein Bild einer Positionierungskomponente (2) des Batteriepacks erfasst als Reaktion darauf, dass der Dreiachsenmechanismus (11) die bestimmte Position erreicht;
das Sichterfassungssystem (114) einen Abstandsabweichungswert zwischen der Positionierungskomponente (2) und einem voreingestellten Referenzpunkt basierend auf dem erfassten Detektionsbild bestimmt; und
die Steuerung den Dreiachsenmechanismus (11) steuert, um die Befestigungskomponente (115) basierend auf dem Abstandsabweichungswert zur Positionierungskomponente (2) zu treiben, um das Batteriepack durch die Befestigungskomponente (115) an dem Rahmenkörper (1) zu befestigen.

## Revendications

1. Système de positionnement pré-soudage, comprenant : un corps de bâti (1), un dispositif de commande, un mécanisme à trois axes (11) placé sur le corps de bâti (1), et un système d'acquisition visuelle (114) placé sur le mécanisme à trois axes (11),
le dispositif de commande étant configuré pour commander le mécanisme à trois axes (11) afin qu'il se déplace jusqu'à une position désignée sur la base des informations de produit d'un bloc-batterie à souder ;
le système de positionnement pré-soudage étant **caractérisé en ce que** :
un composant de fixation (115) est disposé sur le mécanisme à trois axes (11) ;
le système d'acquisition visuelle (114) est configuré pour acquérir, à la position désignée, une image d'un composant de positionnement (2) du bloc-batterie, en réponse au fait que le mécanisme à trois axes (11) atteint la position désignée ; et déterminer une valeur d'écart de distance entre le composant de positionnement (2) et un point de référence prédéfini sur la base de l'image de détection acquise ; et
le dispositif de commande est en outre configuré pour commander le mécanisme à trois axes (11) afin d'entraîner le composant de fixation (115) jusqu'au composant de positionnement (2) sur la base de la valeur d'écart de distance de manière à fixer le bloc-batterie au corps de bâti (1) au moyen du composant de fixation (115).

2. Système de positionnement pré-soudage selon la revendication 1, dans lequel le corps de bâti (1) est en outre pourvu d'un mécanisme de levage (12) sur lequel est disposé un vérin de levage (121), et le vérin de levage (121) s'étend pour séparer le bloc de batterie, se trouvant sur un chariot de transport, du chariot de transport ; et
le dispositif de commande est en outre configuré pour commander le vérin de levage (121) afin qu'il s'étende pour élever le bloc-batterie jusqu'à une hauteur prédéfinie, en réponse à une demande de positionnement envoyée par le chariot de transport ; puis commander le mécanisme à trois axes (11) afin qu'il se déplace jusqu'à la position désignée en fonction des informations de produit.

3. Système de positionnement pré-soudage selon la revendication 2, dans lequel
le dispositif de commande est en outre configuré pour obtenir les informations de produit lues du bloc-batterie et des informations à comparer du bloc-batterie, en réponse à la demande de positionnement envoyée par le chariot de transport ; et
commander le vérin de levage (121) de façon à ce qu'il s'étende en réponse au fait que les informations de produit correspondent aux informations à comparer.

4. Système de positionnement pré-soudage selon l'une quelconque des revendications 1 à 3, dans lequel
le système d'acquisition visuelle (114) est en outre configuré pour envoyer la valeur d'écart de distance à un module de stockage du dispositif de commande ; et la valeur d'écart de distance comprend : une première valeur d'écart dans une direction d'axe X et une seconde valeur d'écart dans une direction d'axe Y dans un système de coordonnées de plan bidimensionnel.

5. Système de positionnement pré-soudage selon la revendication 4, dans lequel
le dispositif de commande est configuré en outre pour commander un mécanisme de déplacement d'axe X (111) et un mécanisme de déplacement d'axe Y (112) sur le mécanisme à trois axes (11) de façon à ce qu'ils se déplacent sur la base respectivement de la première valeur d'écart et de la seconde valeur d'écart, de sorte que le composant de fixation (115) se déplace jusqu'à une position directement au-dessus du composant de positionnement (2) ; et
le dispositif de commande est configuré en outre pour commander un mécanisme de déplacement d'axe Z (113) sur le mécanisme à trois axes (11) de façon à ce qu'il descende à la hauteur prédéfinie, en réponse au fait que le composant de fixation (115) atteint la position directement au-dessus du composant de positionnement (2), de sorte que le composant de fixation (115) soit inséré dans le composant de positionnement (2).

6. Système de positionnement pré-soudage selon la revendication 5, dans lequel
le dispositif de commande est configuré en outre pour déterminer une première valeur de distance compensée correspondant au mécanisme de déplacement d'axe X (111) sur la base de la première valeur d'écart et déterminer une seconde valeur de distance compensée correspondant au mécanisme de déplacement d'axe Y (112) sur la base de la seconde valeur d'écart ; et
le dispositif de commande est configuré en outre pour commander le mécanisme de déplacement d'axe X (111) de façon à ce qu'il se déplace en fonction de la première valeur de distance compensée et pour commander le mécanisme de déplacement d'axe Y (112) de façon à ce qu'il se déplace en fonction de la seconde valeur de distance compensée, de sorte que le composant de fixation (115) se déplace jusqu'à la position directement au-dessus du composant de positionnement (2).

7. Système de positionnement pré-soudage selon l'une quelconque des revendications 1 à 6, dans lequel un corps de bâti inférieur et un corps de bâti supérieur sont prévus sur le corps de bâti (1), le mécanisme de levage (12) est placé sur le corps de bâti inférieur, une structure est placée sur le corps de bâti supérieur, et deux mécanismes à trois axes (11) sont placés sur la structure ; et le chariot de transport transporte le bloc-batterie dans une direction prédéfinie pour l'introduire dans un poste prédéfini correspondant au corps de bâti (1), et une fois que le bloc-batterie est séparé du chariot de transport, le chariot de transport sort du poste prédéfini dans une direction opposée à la direction prédéfinie ; et
les deux mécanismes à trois axes (11) sont configurés pour fixer des composants de positionnement (2) situés sur deux coins opposés du bloc-batterie.

8. Procédé de positionnement pré-soudage, appliqué à un dispositif de commande d'un système de positionnement pré-soudage, le système de positionnement pré-soudage comprenant :
un corps de bâti (1), un mécanisme à trois axes (11) disposé sur le corps de bâti (1), et un système d'acquisition visuelle (114) disposé sur le mécanisme à trois axes (11),
le dispositif de commande commandant le mécanisme à trois axes (11) de façon à ce qu'il se déplace jusqu'à une position désignée sur la base des informations de produit d'un bloc-batterie à souder, de sorte que le système d'acquisition visuelle (114) acquière, à la position désignée, une image d'un composant de positionnement (2) du bloc-batterie ;
le procédé de positionnement pré-soudage étant **caractérisé par** :
la disposition d'un composant de fixation (115) sur le mécanisme à trois axes (11) ;
l'obtention, par le dispositif de commande, d'une valeur d'écart de distance, entre le composant de positionnement (2) et un point de référence prédéterminé, déterminée par le système d'acquisition visuelle (114) sur la base de l'image de détection acquise, et la commande du mécanisme à trois axes (11), par le dispositif de commande, pour entraîner le composant de fixation (115) jusqu'au composant de positionnement (2) sur la base de la valeur d'écart de distance de manière à fixer le bloc-batterie sur le corps de bâti (1) au moyen du composant de fixation (115).

9. Procédé de positionnement pré-soudage selon la revendication 8, dans lequel le corps de bâti (1) est pourvu d'un mécanisme de levage (12) sur lequel un vérin de levage (121) est disposé et, avant que le dispositif de commande commande le mécanisme à trois axes (11) de façon à ce qu'il se déplace jusqu'à la position désignée sur la base des informations de produit du bloc-batterie à souder, le procédé de positionnement pré-soudage comprenant en outre :
la commande du vérin de levage (121), par le dispositif de commande, de façon à ce qu'il s'étende afin d'élever le bloc-batterie se trouvant sur un chariot de transport jusqu'à une hauteur prédéfinie, en réponse à une demande de positionnement envoyée par le chariot de transport, de sorte que le bloc-batterie, se trouvant sur le chariot de transport, soit séparé du chariot de transport.

10. Procédé de positionnement pré-soudage selon la revendication 9, dans lequel la commande du vérin de levage (121), par le dispositif de commande, de façon à ce qu'il s'étende en réponse à la demande de positionnement envoyée par le chariot de transport comprend :
l'obtention, par le dispositif de commande, des informations de produit lues du bloc-batterie et d'informations à comparer du bloc-batterie, en réponse à la demande de positionnement envoyée par le chariot de transport ; et
la commande du vérin de levage (121) de façon à ce qu'il s'étende en réponse au fait que les informations de produit correspondent aux informations à comparer.

11. Procédé de positionnement pré-soudage selon l'une quelconque des revendications 8 à 10, dans lequel la valeur d'écart de distance comprend : une première valeur d'écart dans une direction d'axe X et une seconde valeur d'écart dans une direction d'axe Y dans un système de coordonnées de plan bidimensionnel ; et la commande du mécanisme à trois axes (11) pour entraîner le composant de fixation (115) jusqu'au composant de positionnement (2) sur la base de la valeur d'écart de distance comprend :
la commande d'un mécanisme de déplacement d'axe X (111) et d'un mécanisme de déplacement d'axe Y (112) sur le mécanisme à trois axes (11), par le dispositif de commande, de façon à ce qu'ils se déplacent sur la base respectivement de la première valeur d'écart et de la seconde valeur d'écart, de sorte que le composant de fixation (115) se déplace jusqu'à une position directement au-dessus du composant de positionnement (2) ; et
la commande d'un mécanisme de déplacement d'axe Z (113) sur le mécanisme à trois axes (11), par le dispositif de commande, de façon à ce qu'il descende à la hauteur prédéfinie, en réponse au fait que le composant de fixation (115) atteint la position directement au-dessus du composant de positionnement (2), de sorte que le composant de fixation (115) soit inséré dans le composant de positionnement (2).

12. Procédé de positionnement pré-soudage selon la revendication 11, dans lequel la commande du mécanisme de déplacement d'axe X (111) et du mécanisme de déplacement d'axe Y (112) sur le mécanisme à trois axes (11), par le dispositif de commande, de façon à ce qu'ils se déplacent sur la base respectivement de la première valeur d'écart et de la seconde valeur d'écart, de sorte que le composant de fixation (115) se déplace jusqu'à une position directement au-dessus du composant de positionnement (2) comprend :
la détermination, par le dispositif de commande, d'une première valeur de distance compensée correspondant au mécanisme de déplacement d'axe X (111) sur la base de la première valeur d'écart et la détermination, par le dispositif de commande, d'une seconde valeur de distance compensée correspondant au mécanisme de déplacement d'axe Y (112) sur la base de la seconde valeur d'écart ; et
la commande du mécanisme de déplacement d'axe X (111) de façon à ce qu'il se déplace en fonction de la première valeur de distance compensée et la commande du mécanisme de déplacement d'axe Y (112) de façon à ce qu'il se déplace en fonction de la seconde valeur de distance compensée, de sorte que le composant de fixation (115) se déplace jusqu'à la position directement au-dessus du composant de positionnement (2).

13. Procédé de positionnement pré-soudage, appliqué à un système de positionnement pré-soudage, le système de positionnement pré-soudage comprenant : un corps de bâti (1), un dispositif de commande, un mécanisme à trois axes (11) disposé sur le corps de bâti (1), et un système d'acquisition visuelle (114) disposé sur le mécanisme à trois axes (11),
le dispositif de commande commandant le mécanisme à trois axes (11) afin qu'il se déplace jusqu'à une position désignée sur la base des informations de produit d'un bloc-batterie à souder ;
le procédé de positionnement pré-soudage étant **caractérisé en ce que** :
un composant de fixation (115) est disposé sur le mécanisme à trois axes (11) ;
le système d'acquisition visuelle (114) acquiert, à la position désignée, une image d'un composant de positionnement (2) du bloc-batterie, en réponse au fait que le mécanisme à trois axes (11) atteint la position désignée ;
le système d'acquisition visuelle (114) détermine une valeur d'écart de distance entre le composant de positionnement (2) et un point de référence prédéfini sur la base de l'image de détection acquise ; et
le dispositif de commande commande le mécanisme à trois axes (11) afin d'entraîner le composant de fixation (115) jusqu'au composant de positionnement (2) sur la base de la valeur d'écart de distance de manière à fixer le bloc-batterie au corps de bâti (1) au moyen du composant de fixation (115).
